# FASCICULE DE BREVET EUROPEEN

(11) **EP 1 229 308 B1**
(45) Date de publication et mention de la délivrance du brevet: **01.09.2010**
(21) Numéro de dépôt: 01205207.2
(22) Date de dépôt: 26.12.2001
(51) Int. Cl.: G01D 11/24

(54) **Ensemble de montage pour appareil de détection**
Montageanordnung für eine Detektorvorrichtung
Mounting assembly for sensing device

(30) Priorité: 19.01.2001 FR 0100964
(43) Date de publication de la demande: 07.08.2002
(73) Titulaire: Schneider Electric Industries SAS, 92500 Rueil-Malmaison (FR)
(72) Inventeur: Pitault, Gérard, 16600 Ruelle (FR); Cheong, Eugène, 680217 Singapour (SG)

(56) Documents cités:
- EP-A2- 0 241 731
- DE-U- 9 310 119
- US-A- 4 346 274
- US-A- 4 957 264
- US-A- 6 029 940

## Description

La présente invention concerne un ensemble de montage destiné à l'installation et au montage rapide d'un appareil de détection, tel que notamment un interrupteur de position, un détecteur de proximité inductif, capacitif ou optique.

Certains appareils de détection sont composés d'un boîtier de forme sensiblement parallélépipédique comportant une face avant qui fait office de face de détection. Ces boîtiers comportent des trous afin de pouvoir être fixés sur un support quelconque, comme le bâti d'une machine, par des vis de fixation, soit directement soit par l'intermédiaire d'une équerre de fixation par exemple. Le réglage de la position de la face de détection d'un tel appareil est important puisqu'il détermine sa portée et sa direction. Le réglage doit être précis pour garantir une bonne efficacité de l'appareil. Il existe donc des moyens de réglage sur le support et/ou sur l'équerre, généralement des trous de fixation oblongs, qui permettent de modifier la position de l'appareil de détection suivant au moins un axe avant son serrage définitif nécessaire pour une bonne immobilisation.

Ainsi, une partie au moins du réglage de l'appareil de détection par rapport au support et/ou à l'équerre se fait au moment du montage de l'appareil. Cependant, lors du remplacement d'un appareil défectueux par exemple, ce système impose que le réglage soit recommencé lors de la mise en place du nouvel appareil, ce qui présente de nombreux inconvénients de temps d'intervention, de disponibilité machine, de compétences humaines, de risques d'erreurs, etc.

Le document US4957264 décrit un socle de montage pour appareil de type téléphone qui comporte une joue de butée comprenant des moyens d'encliquetage et des moyens élastiques destinés à maintenir l'appareil. Le document EP0241731 décrit un socle de montage qui comporte deux crochets coopérant avec des encoches d'un appareil électronique destiné à être monté sur le socle. Néanmoins ces deux documents ne proposent pas de moyens permettant de faciliter un enlèvement rapide de l'appareil de son socle.

Il serait donc particulièrement avantageux d'être capable de remplacer un appareil de détection par un autre, en conservant une bonne fixation et sans être cependant obligé de régler à nouveau la position du nouvel appareil. Il serait également avantageux de pouvoir installer un tel appareil de détection le plus rapidement possible sans nécessiter d'outil particulier.

Pour cela, l'invention décrit un ensemble de montage pour un appareil de détection constitué d'un boîtier de forme sensiblement parallélépipédique muni d'une face avant de détection, d'une face arrière, d'une première face latérale comprenant une sortie de fil, d'une face latérale de butée opposée à la première face latérale et située entre deux faces latérales de guidage. L'ensemble de montage comprend une plaquette de fixation qui comporte une embase de forme sensiblement rectangulaire, une joue de butée située sur une arête de l'embase et comprenant des moyens de butée aptes à coopérer avec des moyens correspondants positionnés sur la face latérale de butée de l'appareil de détection, des moyens d'encliquetage aptes à coopérer avec des moyens correspondants situés sur la première face latérale de l'appareil de détection, des moyens élastiques de pression appuyant sur la face arrière de l'appareil de détection. Les moyens d'encliquetage de la plaquette de fixation comprennent au moins un verrou élastique situé sur une arête de l'embase à l'opposé de la joue de butée, susceptible de verrouiller et de déverrouiller l'appareil de détection.

Selon une caractéristique, les moyens de butée de la plaquette de fixation comprennent une ou plusieurs pattes élastiques découpées dans la joue de butée et coopérant avec une ou plusieurs encoches correspondantes positionnées sur la face latérale de butée de l'appareil de détection.

Les moyens élastiques de pression de la plaquette de fixation sont constitués par au moins une languette ressort découpée dans l'embase de la plaquette de fixation, servant à immobiliser l'appareil de détection en position verrouillée et à faciliter son éjection en position déverrouillée.

Selon une autre caractéristique, l'ensemble de montage comprend également une base de fixation composée d'un socle solidaire d'une platine de montage, le socle étant destiné à recevoir une plaquette de fixation grâce à un dispositif de fixation plaquette/socle et/ou à recevoir un appareil de détection grâce à plusieurs trous de fixation taraudés, et la platine de montage étant destiné à fixer l'ensemble de montage sur un support.

D'autres caractéristiques et avantages vont apparaître dans la description détaillée qui suit en se référant à un mode de réalisation donné à titre d'exemple et représenté par les dessins annexés sur lesquels :
- la figure 1 représente une vue en perspective d'un exemple d'ensemble de montage suivant l'invention avec un appareil de détection,
- la figure 2 donne une autre vue en perspective d'une plaquette de fixation,
- la figure 3 montre une variante d'une base de fixation,
- la figure 4 représente un autre mode de réalisation d'un ensemble de montage.

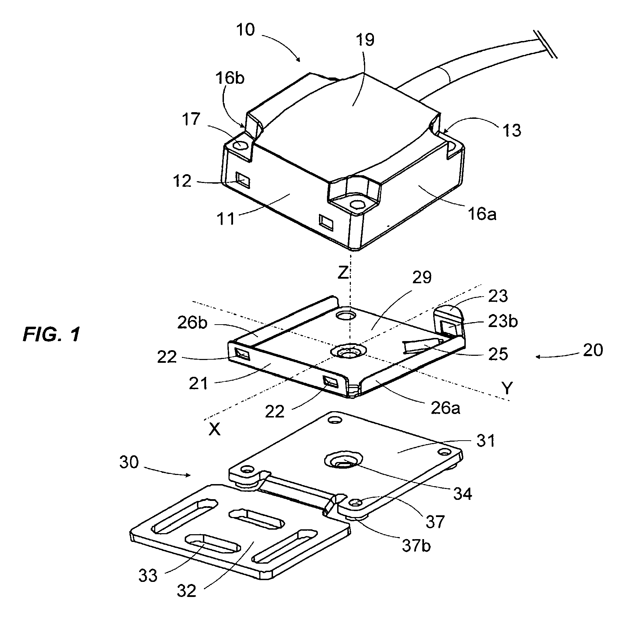

En référence à la figure 1, un appareil de détection 10 est constitué d'un boîtier de forme sensiblement parallélépipédique. Ce boîtier possède une face avant de détection 19, une face arrière et quatre faces latérales. Ces quatre faces latérales sont constituées d'une première face latérale 13 comprenant une sortie de fil pour un raccordement électrique de l'appareil de détection 10, d'une face latérale de butée 11 opposée à la première face latérale 13 et de deux faces latérales de guidage 16a,16b situées de part et d'autre de la première face latérale 13.

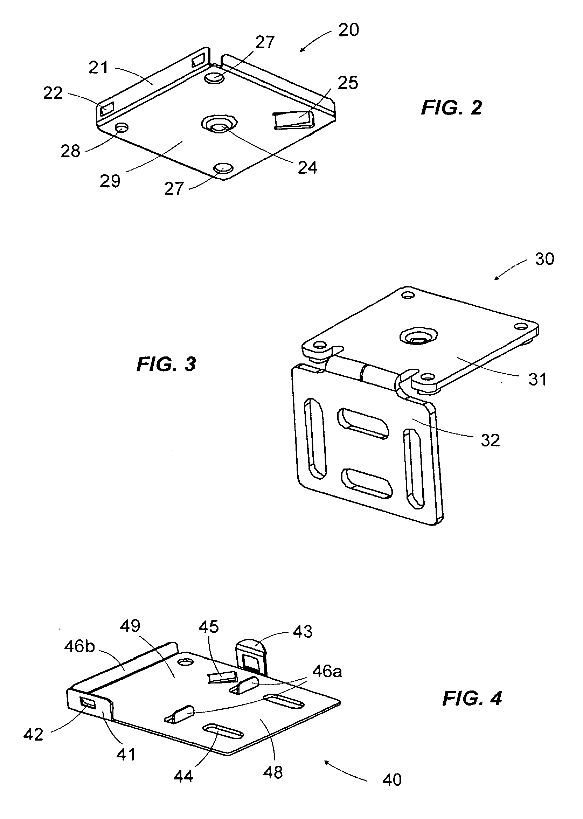

Pour fixer cet appareil de détection 10 à un support quelconque tel que le bâti d'une machine ou autre, on utilise un ensemble de montage constitué d'une plaquette de fixation 20 et d'une base de fixation 30. Cet ensemble de montage doit être capable d'immobiliser l'appareil de détection 10 sur le support. Il peut aussi permettre de régler sa position suivant au moins une direction avant serrage. Le rôle de la plaquette de fixation 20 est de pouvoir verrouiller et déverrouiller rapidement l'appareil de détection 10 sur l'ensemble de montage, de façon à pouvoir changer rapidement un appareil 10. Le rôle de la base de fixation 30 est de fixer et de régler sur un support quelconque l'ensemble de montage muni d'un appareil 10. En fonction du mode de réalisation choisi, la plaquette de fixation 20 et la base de fixation 30 sont constituées de deux pièces distinctes (voir figures 1 à 3) assemblées entre elles ou sont constituées d'une pièce de fixation 40 unique (voir figure 4).

La plaquette de fixation 20 comporte
- une embase 29 de forme approximativement rectangulaire ou même carrée,
- une joue de butée 21 située sur une arête de l'embase 29 et comprenant des moyens de butée 22 qui peuvent coopérer avec des moyens correspondants 12 positionnés sur la face latérale de butée 11 de l'appareil de détection 10,
- des moyens d'encliquetage 23 qui peuvent coopérer avec des moyens correspondants situés sur la première face latérale 13 de l'appareil de détection 10,
- des moyens élastiques de pression 25 appuyant sur la face arrière de l'appareil de détection 10,
- deux joues de guidage 26a,26b situées de part et d'autre de la joue de butée 21, coopérant respectivement avec les deux faces latérales de guidage 16a,16b de l'appareil de détection 10.

Les moyens de butée de la plaquette de fixation 20 comprennent une ou plusieurs pattes élastiques 22 découpées dans la joue de butée 21 (par exemple, deux pattes élastiques 22 dans le mode de réalisation préféré de la figure 1, une patte élastique 42 dans le second mode de réalisation de la figure 4). Lors du positionnement de la face latérale de butée 11 de l'appareil 10 contre la joue de butée 21, l'extrémité des pattes élastiques 22 vient s'insérer dans des encoches 12 placées en correspondance sur la face latérale de butée 11 afin de coincer la face latérale de butée 11 contre la joue de butée 21. Il se forme ainsi une sorte de charnière qui permettra alors, par un léger mouvement de rotation de l'appareil 10, de positionner la première face latérale 13 contre les moyens d'encliquetage 23 de la plaquette de fixation 20.

Les moyens d'encliquetage 23 de la plaquette de fixation 20 comprennent au moins un verrou élastique 23 situé sur une arête de l'embase 29 à l'opposé de la joue de butée 21. Ce verrou élastique 23 est muni d'un orifice 23b découpé dans le verrou. Le verrou élastique 23 est susceptible de verrouiller et de déverrouiller l'appareil de détection 10 grâce à l'orifice 23b qui coopère avec un ergot de maintien (non représenté sur les figures) placé sur la première face latérale 13 de l'appareil de détection 10. Lors de la mise en place de l'appareil de détection 10, le verrou élastique 23 s'écarte naturellement de sa position normale jusqu'à ce que l'ergot de maintien vienne se positionner dans l'orifice 23b. Une fois l'ergot de maintien positionné, le verrou élastique 23 reprend sa position normale empêchant ainsi l'appareil de détection 10 de s'extraire. Ceci permet donc, en combinaison avec les moyens de butée 22, de verrouiller l'appareil de détection 10 sur la plaquette de fixation 20. Il suffit ensuite d'écarter le verrou élastique 23, soit manuellement, soit à l'aide d'un outil tel qu'un tournevis plat ou autre, pour pouvoir libérer l'ergot de maintien de l'orifice 23b et donc pour déverrouiller facilement l'appareil 10.

Les moyens élastiques de pression 25 de la plaquette de fixation 20 sont constitués par au moins une languette ressort 25 découpée dans l'embase 29 de la plaquette de fixation 20. Cette languette ressort 25 appuie contre la face arrière de l'appareil de détection 10 de sorte que, lorsque celui-ci est en position verrouillée, elle sert à immobiliser l'appareil de détection 10 selon un axe Z perpendiculaire au plan de l'embase 29, en éliminant les jeux existant d'une part entre l'ergot de maintien et l'orifice 23b et d'autre part entre les pattes élastiques 22 et les encoches 12. La languette ressort 25 sert également à faciliter l'éjection de l'appareil de détection 10 au moment du déverrouillage, permettant d'extraire très facilement l'appareil 10.

Les deux joues de guidage 26a,26b sont destinées à guider le positionnement de l'appareil de détection 10 selon un axe Y (voir figure 1) et à assurer son maintien latéral selon cet axe. Dans le mode de réalisation préféré représenté en figure 1, les joues de guidage 26a,26b sont situées sur des arêtes opposées de l'embase 29 de la plaquette de fixation 20.

La plaquette de fixation 20 est réalisée préférentiellement dans un acier de type acier à ressort d'une épaisseur de l'ordre de 0,5mm de façon à donner une élasticité à la languette ressort 25 et au verrou élastique 23. Pour obtenir une plaquette de fixation 20 la plus simple et la plus économique possible, les joues de guidage 26a,26b, la joue de butée 21 et le verrou élastique 23 sont obtenus par une simple opération de pliage. Les joues de guidage 26a,26b, la joue de butée 21 et le verrou élastique 23 sont dirigé dans une même direction sensiblement perpendiculaire au plan de l'embase 29. Cependant, le verrou élastique 23 fait avec l'embase 29 un angle légèrement inférieur à 90° pour contribuer au serrage de l'appareil de détection 10 selon un axe X perpendiculaire aux axes Y et Z. La ou les pattes élastiques 22, la languette ressort 25 et les crevés de guidage 46a sont des repoussés obtenus par des opérations de découpage.

Ainsi, la plaquette de fixation 20 permet d'une part de maintenir efficacement un appareil de détection 10 dans les 3 directions : suivant l'axe X grâce à la joue de butée 21 et au verrou élastique 23, suivant l'axe Y grâce aux joues de guidage 26a,26b qui renforcent le maintien latéral et suivant l'axe Z grâce aux pattes élastiques 22, au verrou élastique 23 et à la languette ressort 25. Elle permet d'autre part de pouvoir facilement verrouiller un appareil de détection 10 sans outil et le déverrouiller avec un outil ordinaire tel qu'un tournevis plat.

Dans le mode de réalisation préféré représenté dans les figures 1 à 3, la base de fixation 30 comporte deux parties : un socle 31 de forme approximativement rectangulaire ou carrée, solidaire d'une platine de montage 32. La platine de montage 32 possède des trous oblongs 33 permettant une fixation et un réglage de l'ensemble de montage sur un support quelconque, de manière connue. Le socle 31 est destiné à recevoir la plaquette de fixation 20 grâce à un dispositif de fixation plaquette/socle. Le socle 31 permet aussi de recevoir directement un appareil de détection 10 grâce à plusieurs trous de fixation taraudés 37 dans le socle 31; les figures 1 et 3 montrent par exemple quatre trous de fixation taraudés 37 situés aux quatre extrémités du socle 31.

Le dispositif de fixation plaquette/socle se compose d'un trou conique fileté 34 situé au centre du socle 31 coopérant avec un trou conique 24 au centre de l'embase 29 de la plaquette de fixation 20, ainsi que d'un ergot de positionnement 28 de l'embase 29 coopérant avec un des trous de fixation taraudés 37 du socle 31. Pour fixer la plaquette de fixation 20 sur le socle 31, on peut utiliser une vis centrale à tête fraisée introduite dans le trou conique 24 et vissée dans le trou conique fileté 34. Dans le but d'améliorer la rigidité de cette fixation, l'ergot de positionnement 28 est logé alors dans l'un des quatre trous 37, empêchant ainsi une rotation intempestive de la plaquette de fixation 20 par rapport au socle 31. Si les formes de la plaquette de fixation 20 et du socle 31 sont carrées, on obtient ainsi quatre possibilités de positionnement de la plaquette de fixation 20, décalées de 90°, correspondant au logement de l'ergot de positionnement 28 dans un des quatre trous de fixation taraudés 37.

Il est également possible d'utiliser cet ensemble de montage pour visser directement un appareil de détection 10 sur le socle 31 sans utiliser de plaquette de fixation 20. En effet, les appareils de détection 10 comportent habituellement quatre trous 17 dont les positions correspondent aux quatre trous de fixations taraudés 37. On peut alors y introduire quatre vis qui vont pouvoir être vissées dans un taraudage 37b (voir figure 1) des trous de fixations taraudés 37. Le taraudage 37b est réalisé par un repoussé dans le socle 31.

Ainsi, la présente invention présente l'avantage supplémentaire de pouvoir utiliser un ensemble de montage tel que décrit précédemment pour une fixation directe d'un appareil de détection sur l'ensemble de montage, sans nécessité l'emploi d'une plaquette de fixation, ce qui est encore demandé dans certaines applications. Dans ce cas, le remplacement d'un appareil de détection par un autre ne perturbe pas non plus le réglage de l'ensemble de montage sur le support, puisqu'on ne touche pas à la platine de montage 32.

La base de fixation 30 est réalisée préférentiellement dans un acier d'une épaisseur de l'ordre de 2mm environ de façon à donner une rigidité suffisante pour une immobilisation efficace de l'appareil de détection 10 sur le support. Il n'est donc pas intéressant d'utiliser le même matériau pour la plaquette de fixation 20 et pour la base de fixation 30. Les appareils de détection 10 utilisés avec un ensemble de montage tel que décrit ci-dessus sont d'un poids généralement supérieur à 20 grammes, par exemple environ 50 grammes avec des dimensions de l'ordre de 40x40x15 mm. Dans la figure 1, le socle 31 et la platine de montage 32 sont dans deux plans parallèles et le plan de la platine de montage 32 est légèrement décalé par rapport au plan du socle 31 de façon à compenser l'épaisseur engendrée par les taraudages 37b et le trou conique fileté 34. Dans une variante équivalente schématisée en figure 3, le socle 31 et la platine de montage 32 sont dans deux plans orthogonaux, la base de fixation 30 formant ainsi une équerre.

Un second mode de réalisation de l'invention, schématisé en figure 4, est plus particulièrement réservé aux petits appareils de détection 10 de faible poids et de faible encombrement. C'est pourquoi l'ensemble de montage comprend alors une plaquette de fixation et une base de fixation ne formant qu'une seule pièce de fixation 40 pour le verrouillage et le déverrouillage un appareil de détection 10 ainsi que pour le réglage et la fixation de l'ensemble de montage sur un support quelconque. Etant donné le faible poids des petits appareils de détection 10 (généralement, ce second mode de réalisation concerne des appareils de détection d'une masse inférieure ou égale à 10 grammes avec par exemple des dimensions de l'ordre de 8x20x8 mm), cette pièce de fixation 40 peut alors être réalisée dans un acier à ressort du même type que la plaquette de fixation 20.

La plaquette de fixation de cette pièce de fixation 40 comporte une embase 49, une joue de butée 41 munie d'une patte élastique 42, un verrou élastique 43, une languette ressort 45 et deux joues de guidage 46a,46b. Les fonctions remplies par la joue de butée 41, la patte élastique 42, le verrou élastique 43, la languette ressort 45 et les deux joues de guidage 46a,46b sont similaires à celles remplies respectivement par la joue de butée 21, les pattes élastiques 22, le verrou élastique 23, la languette ressort 25 et les joues de guidage 26a,26b. Au moins une des joues de guidage 46a,46b est composée d'un ou plusieurs crevés 46a découpés dans l'embase 49. L'embase 49 est prolongée par une base de fixation 48 qui comprend des trous de fixation oblongs 44 permettant de régler la position de la pièce de fixation 40 et de fixer l'ensemble de montage sur un support.

Il est bien entendu que l'on peut, sans sortir du cadre de l'invention, imaginer d'autres variantes et perfectionnements de détail et de même envisager l'emploi de moyens équivalents.

## Revendications

1. Ensemble de montage pour un appareil de détection (10) constitué d'un boîtier de forme sensiblement parallélépipédique muni d'une face avant de détection (19), d'une face arrière, d'une première face latérale (13) comprenant une sortie de fil, d'une face latérale de butée (11) opposée à la première face latérale (13) et située entre deux faces latérales de guidage (16a,16b), l'ensemble de montage comprenant une plaquette de fixation (20) qui comporte :
- une embase (29) de forme sensiblement rectangulaire,
- une joue de butée (21) située sur une arête de l'embase (29) et comprenant des moyens de butée (22) aptes à coopérer avec des moyens correspondants (12) positionnés sur la face latérale de butée (11) de l'appareil de détection (10),
- des moyens d'encliquetage (23) qui sont aptes à coopérer avec des moyens correspondants situés sur la première face latérale (13) de l'appareil de détection (10), et qui comprennent au moins un verrou élastique (23) situé sur une arête de l'embase (29) à l'opposé de la joue de butée (21) et susceptible de verrouiller et de déverrouiller l'appareil de détection (10),
- des moyens élastiques de pression (25) appuyant sur la face arrière de l'appareil de détection (10),
**caractérisé par le fait que** les moyens de butée comprennent une ou plusieurs pattes élastiques (22) découpées dans la joue de butée (21) et coopérant avec une ou plusieurs encoches correspondantes (12) positionnées sur la face latérale de butée (11) de l'appareil de détection (10).

2. Ensemble de montage selon la revendication 1, **caractérisé par le fait que** les moyens élastiques de pression de la plaquette de fixation (20) sont constitués par au moins une languette ressort (25) découpée dans l'embase (29) de la plaquette de fixation (20), servant à immobiliser l'appareil de détection (10) en position verrouillée et à faciliter son éjection en position déverrouillée.

3. Ensemble de montage selon l'une des revendications précédentes, **caractérisé par le fait que** la plaquette de fixation (20) comprend également deux joues de guidage (26a,26b) situées de part et d'autre de la joue de butée (21), coopérant respectivement avec les deux faces latérales de guidage (16a,16b) de l'appareil de détection (10).

4. Ensemble de montage selon la revendication 3, **caractérisé par le fait que** les joues de guidage (26a,26b) sont placées sur des arêtes opposées de l'embase (29) de la plaquette de fixation (20).

5. Ensemble de montage selon la revendication 3, **caractérisé par le fait qu'**au moins une joue de guidage est formée par un ou plusieurs crevés (46a) découpés dans l'embase (49).

6. Ensemble de montage selon l'une des revendications 1 à 3, **caractérisé par le fait qu'**il comprend également une base de fixation (30) composée d'un socle (31) solidaire d'une platine de montage (32), le socle (31) étant destiné à recevoir une plaquette de fixation (20) grâce à un dispositif de fixation plaquette/socle et à recevoir un appareil de détection (10) grâce à plusieurs trous de fixation taraudés (37), et la platine de montage (32) étant destiné à fixer l'ensemble de montage sur un support.

7. Ensemble de montage selon la revendication 6, **caractérisé par le fait que** le dispositif de fixation plaquette/socle comporte un trou conique fileté (34) dans le socle (31) coopérant avec un trou conique (24) dans l'embase (29) de la plaquette de fixation (20), ainsi qu'un ergot de positionnement (28) de l'embase (29) coopérant avec un des trous de fixation taraudés (37) du socle (31).

8. Ensemble de montage selon l'une des revendications 1 à 3, **caractérisé par le fait que** l'embase (49) est prolongée par une base de fixation (48) permettant de fixer l'ensemble de montage sur un support.

## Claims

1. Mounting assembly for a detection device (10) composed of an approximately parallelepiped shaped housing provided with a front detection face (19), a back face, a first side face (13) comprising a wire output, a stop side face (11) opposite the first side face (13) located between two guide side faces (16a, 16b), the mounting assembly comprising a fixing part (20) that comprises:
- an approximately rectangular attachment plate (29),
- a stop lip (21) located on an edge of the attachment plate (29) and comprising stop means (22) capable of cooperating with corresponding means (12) positioned on the stop side face (11) of the detection device (10),
- click fit means (23) capable of cooperating with corresponding means located on the first side face (13) of the detection device (10), the click fit means comprising at least an elastic retainer (23) located on an edge of the attachment plate (29) opposite the stop lip (21) and capable of retaining and releasing the detection device (10),
- elastic pressure means (25) pressing on the back face of the detection device (10)
**characterized in that** the stop means of the fixing part (20) comprise one or several elastic tabs (22) cutout in the stop lip (21) and cooperating with one or several corresponding notches (12) located on the stop side face (11) of the detection device (10).

2. Mounting assembly according to claim 1, **characterized in that** the elastic pressure means of the fixing part (20) are composed of at least one spring strip (25) cut out in the attachment plate (29) of the fixing part (20), used to fix the detection device (10) in the retained position and to facilitate its ejection in the released position.

3. Mounting assembly according to one of the previous claims, **characterized in that** the fixing part (20) also comprises two guide lips (26a, 26b) located on each side of the stop lip (21), cooperating with the two guide side faces (16a, 16b) respectively of the detection device (10).

4. Mounting assembly according to claim 3, **characterized in that** the guide lips (26a, 26b) are placed on opposite edges of the attachment plate (29) of the fixing part (20).

5. Mounting assembly according to claim 3, **characterized in that** at least one guide lip is formed from one or several openings (46a) cut out in the base plate (49).

6. Mounting assembly according to one of claims 1 to 3, **characterized in that** it also comprises a fixed mounting part (30) composed of a base plate (31) fixed to a mounting plate (32), the base plate (31) being designed to hold a fixing part (20) by means of a fixing part / base plate attachment device and to support a detection device (10) using the several threaded attachment holes (37), and the mounting plate (32) being designed to fix the mounting assembly onto a support.

7. Mounting assembly according to claim 6, **characterized in that** the fixing part / base plate attachment device comprises a conical threaded hole (34) in the base plate cooperating with a conical hole (24) in the attachment plate (29) of the fixing part (20), and a positioning pin (28) for the attachment plate (29) cooperating with one of the threaded attachment holes (37) of the base plate (31).

8. Mounting assembly according to one of claims 1 to 3, **characterized in that** the base plate (49) is prolonged by an fixed mounting part (48) used to fix the mounting assembly on a support.

## Patentansprüche

1. Montageeinheit für ein Erfassungsgerät (10), das aus einem Gehäuse von im Wesentlichen parallelepipedischer Form besteht, welches mit einer vorderen Erfassungsseite (19), einer Rückseite, einer ersten Seitenfläche (13), die einen Drahtausgang enthält, einer Anschlag-Seitenfläche (11) entgegengesetzt zur ersten Seitenfläche (13) und zwischen zwei Führungsseitenflächen (16a, 16b) angeordnet versehen ist, wobei die Montageeinheit eine Befestigungsplatte (20) enthält, die aufweist:
- eine Grundplatte (29) von im Wesentlichen rechteckiger Form,
- eine Anschlagwange (21), die sich auf einer Kante der Grundplatte (29) befindet und Anschlageinrichtungen (22) enthält, die mit entsprechenden Einrichtungen (12) zusammenwirken können, die auf der Anschlag-Seitenfläche (11) des Erfassungsgeräts (10) positioniert sind,
- Einrasteinrichtungen (23), die mit entsprechenden Einrichtungen zusammenwirken können, die sich auf der ersten Seitenfläche (13) des Erfassungsgeräts (10) befinden und mindestens einen elastischen Riegel (23) enthalten, der sich auf einer Kante der Grundplatte (29) entgegengesetzt zur Anschlagwange (21) befindet und das Erfassungsgerät (10) verriegeln und entriegeln kann,
- elastische Druckeinrichtungen (25), die auf die Rückseite des Erfassungsgeräts (10) drücken,
**dadurch gekennzeichnet, dass** die Anschlageinrichtungen eine oder mehrere elastische Laschen (22) enthalten, die aus der Anschlagwange (21) ausgeschnitten sind und mit einer oder mehreren entsprechenden Aussparungen (12) zusammenwirken, die auf der Anschlag-Seitenfläche (11) des Erfassungsgeräts (10) positioniert sind.

2. Montageeinheit nach Anspruch 1, **dadurch gekennzeichnet, dass** die elastischen Druckeinrichtungen der Befestigungsplatte (20) aus mindestens einer Federzunge (25) bestehen, die aus der Grundplatte (29) der Befestigungsplatte (20) ausgeschnitten ist und dazu dient, das Erfassungsgerät (10) in der verriegelten Stellung zu blockieren und seinen Auswurf in der entriegelten Stellung zu vereinfachen.

3. Montageeinheit nach einem der vorhergehenden Ansprüche, **dadurch gekennzeichnet, dass** die Befestigungsplatte (20) ebenfalls zwei Führungswangen (26a, 26b) enthält, die sich zu beiden Seiten der Anschlagwange (21) befinden und je mit den zwei Führungsseitenflächen (16a, 16b) des Erfassungsgeräts (10) zusammenwirken.

4. Montageeinheit nach Anspruch 3, **dadurch gekennzeichnet, dass** die Führungswangen (26a, 26b) auf entgegengesetzten Kanten der Grundplatte (29) der Befestigungsplatte (20) angeordnet sind.

5. Montageeinheit nach Anspruch 3, **dadurch gekennzeichnet, dass** mindestens eine Führungswange von einem oder mehreren Aufrissen (46a) gebildet wird, die in der Grundplatte (49) ausgeschnitten sind.

6. Montageeinheit nach einem der Ansprüche 1 bis 3, **dadurch gekennzeichnet, dass** sie ebenfalls einen Befestigungsfuß (30) enthält, der aus einem fest mit einer Montageplatine (32) verbundenen Sockel (31) besteht, wobei der Sockel (31) dazu bestimmt ist, eine Befestigungsplatte (20) mit Hilfe einer Platte/Sockel-Befestigungsvorrichtung aufzunehmen und ein Erfassungsgerät (10) mit Hilfe mehrerer Befestigungs-Gewindelöcher (37) aufzunehmen, und die Montageplatine (32) dazu bestimmt ist, die Montageeinheit auf einem Träger zu befestigen.

7. Montageeinheit nach Anspruch 6, **dadurch gekennzeichnet, dass** die Platte/Sockel-Befestigungsvorrichtung ein Gewinde-Kegelloch (34) im Sockel (31), das mit einem Kegelloch (24) in der Grundplatte (29) der Befestigungsplatte (20) zusammenwirkt, sowie einen Positionierzapfen (28) der Grundplatte (29) aufweist, der mit einem der Befestigungs-Gewindelöcher (37) des Sockels (31) zusammenwirkt.

8. Montageeinheit nach einem der Ansprüche 1 bis 3, **dadurch gekennzeichnet, dass** die Grundplatte (49) von einem Befestigungsfuß (48) verlängert wird, der es ermöglicht, die Montageeinheit auf einem Träger zu befestigen.
